# EUROPÄISCHE PATENTSCHRIFT

(11) **EP 2 393 270 B1**
(45) Veröffentlichungstag und Bekanntmachung des Hinweises auf die Patenterteilung: **24.10.2012**
(21) Anmeldenummer: 11004104.3
(22) Anmeldetag: 18.05.2011
(51) Int. Cl.: H04M 11/02

(54) **Verfahren zur Inbetriebnahme eines Türzugangssystems eines Hauses**
Method for operating a door access system of a house
Procédé de mise en service d'un système d'accès par une porte à une maison

(30) Priorität: 05.06.2010 DE 102010022811
(43) Veröffentlichungstag der Anmeldung: 07.12.2011
(73) Patentinhaber: ABB AG, 68309 Mannheim (DE)
(72) Erfinder: Wilms, Benjamin, 58802 Balve (DE); Quittmann, Olaf, 59846 Sundern (DE); Kruppa, Christian, 44649 Herne (DE); Zapp, Robert, 58579 Schalksmühle (DE)

(56) Entgegenhaltungen:
- EP-A1- 1 838 078
- DE-A1- 10 253 307
- DE-A1- 19 914 724
- DE-U1-202006 005 191

## Beschreibung

Die Erfindung betrifft ein Verfahren zur Inbetriebnahme eines Türzugangssystems eines Hauses, welches eine Türstation, mindestens zwei Wohnungsstationen sowie einen diese Stationen verbindenden Bus umfasst, wobei die Türstation eine Steuereinheit sowie eine Ruftaste für jede Wohnungsstation aufweist, welche als Anwahlstelle für eine bestimmte Wohnungsstation fungiert und wobei jede Wohnungsstation eine Steuereinheit und eine Bestätigungstaste aufweist.

Aus der DE 102 53 308 B4 sind ein Verfahren zur Inbetriebnahme einer Hauskommunikationsanlage sowie eine mit diesem Verfahren in Betrieb zu nehmende Hauskommunikationsanlage bekannt. Die Hauskommunikationsanlage weist mindestens eine Türstation und eine beliebige Anzahl von Wohnungsstationen auf, wobei alle Stationen über einen gemeinsamen Bus, insbesondere Zweidraht-Bus, verbunden sind, und wobei die Türstation eine Anzahl von den Wohnungsstationen zuzuordnenden Ruftasten aufweist. Zur Programmierung der Zuordnung zwischen den Ruftasten und den Wohnungsstationen ist die Anlage zeitweise in einen Programmiermodus schaltbar, bei welchem zunächst die zu programmierenden Ruftasten der Türstation in einer beliebig gewählten Reihenfolge nacheinander betätigt werden, wodurch tastenspezifische Adressen entsprechend dieser Reihenfolge separat nacheinander abrufbar in einem Speicher abgelegt werden. Anschließend werden entsprechend der gewünschten Ruftasten-Zuordnung die einzelnen Wohnungsstationen nacheinander in der Reihenfolge der abgelegten Adressen auf die jeweilige

Ruftaste programmiert, indem an jeder Wohnungsstation durch Betätigen eines zugehörigen Schaltelements die entsprechend der abgelegten Reihenfolge jeweils nächste tastenspezifische Adresse aus dem Speicher abgerufen und abgelegt wird.

Bei diesem Inbetriebnahme-Verfahren muss ein bestimmter Weg vorgeplant werden und darf nicht verlassen werden. Während der Inbetriebnahme besteht keine Kontrolle über die getroffenen Zuordnungen Ruftaste / Wohnungsstation.

Der Erfindung liegt die Aufgabe zugrunde, ein optimiertes Verfahren zur Inbetriebnahme eines Türzugangssystems eines Hauses anzugeben.

Diese Aufgabe wird in Verbindung mit dem Oberbegriff des Patentanspruchs 1 erfindungsgemäß dadurch gelöst,
- dass in einem ersten Schritt die Steuereinheit der Türstation in den Inbetriebnahmemodus versetzt wird,
- dass in einem zweiten Schritt in allen Wohnungsstationen gleichzeitig die Anwahlstellen sukzessive in kurzen, vorab festgelegten Abständen ausgegeben werden,
- dass in einem dritten Schritt jede Wohnungsstation begangen und die Bestätigungstaste gedrückt wird, sobald die aktuell ausgegebene Anwahlstelle der aktuell aufgesuchten Wohnungsstation zugeordnet werden soll,
- dass in einem vierten Schritt die getroffene Zuordnung in einem Speicher der Türstation dauerhaft abgespeichert wird.

Dabei können in weiterer Ausbildung die bereits abgespeicherten Anwahlstellen aus der Menge der auszugebenden Anwahlstellen gestrichen werden.

Des Weiteren wird zur Kontrolle der zwischen einer Wohnungsstation und einer Anwahlstelle abgespeicherten Zuordnung eine diese Zuordnung betreffende Meldung abgegeben, wonach eine Bestätigung dieser Zuordnung oder eine Löschung mit nachfolgender erneuter Zuordnungsmöglichkeit erfolgt.

Die Ausgabe der Anwahlstellen kann in Form einer akustischen Ansage via Sprachausgabe in den einzelnen Wohnungsstationen und/oder in Form einer optischen Anzeige via Display in den einzelnen Wohnungsstationen erfolgen.

Die mit der Erfindung erzielbaren Vorteile bestehen insbesondere darin, dass keine vorgeschriebene Reihenfolge bei der Anmeldung der Wohnungsstationen während der Inbetriebnahme vorgeschrieben ist. Des Weiteren ist während der Inbetriebnahme eine Kontrolle über die richtige Zuordnung möglich. Ferner sind keine zusätzlichen Hilfsmittel notwendig.

Zweckmäßige Ausgestaltungen der Erfindung sind in den Unteransprüchen dargestellt.

Die Erfindung wird nachstehend an Hand der in der Zeichnung dargestellten Ausführungsbeispiele erläutert. Es zeigen:
- Fig. 1: eine Basisausführung eines sich aus einer Türstation und mehreren Wohnungsstationen zusammensetzenden Türzugangssystems eines Hauses,
- Fig. 2: ein erweitertes Türzugangssystem.

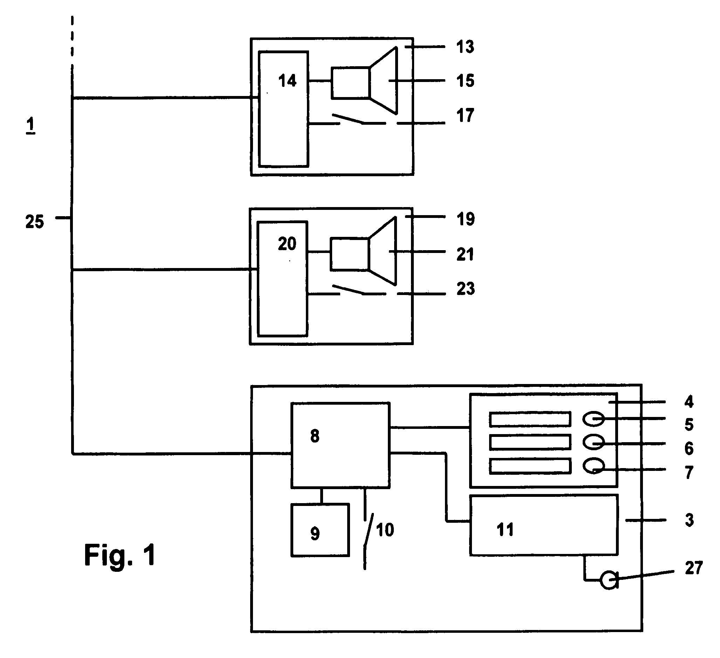

Figur 1 ist eine Basisausführung eines sich aus einer Türstation und mehreren Wohnungsstationen zusammensetzenden Türzugangssystems eines Hauses dargestellt. Dabei sind eine Türstation 3, eine erste Wohnungsstation 13 und eine zweite Wohnungsstation 19 des Türzugangssystems 1 gezeigt, wobei selbstverständlich beliebig weitere Wohnungsstationen vorgesehen sein können. Die Türstation 1 und die Wohnungsstationen 13, 19 sind untereinander über einen Bus 25 miteinander verbunden.

Die Türstation 3 weist ein Tastenfeld 4 mit mehreren Ruftasten auf, wobei beispielhaft drei derartiger Ruftasten 5, 6, 7 gezeigt sind. Die nachfolgend auch allgemein mit "X" bezeichneten Ruftasten 5, 6, 7 beaufschlagen die Eingänge einer an den Bus 25 angeschlossenen Steuereinheit 8, welche mit einem Speicher 9 für die Zuordnung zwischen einer bestimmten Ruftaste und einer bestimmten Wohnungsstation verbunden ist. An die Steuereinheit 8 ist des Weiteren eine für Inbetriebnahmezwecke dienende Aktivierungseinheit 10 (z. B. Kodierschalter oder Taster) angeschlossen. Ferner ist die Steuereinheit 8 mit einem Sprachgenerator 11 verbunden.

Die Wohnungsstation 13 weist eine an den Bus 25 angeschlossene Steuereinheit 14 auf, welche mit einer Sprachausgabe 15 (Lautsprecher oder Hörer) und mit einer Bestätigungstaste 17 verbunden ist. In gleicher Weise weist die Wohnungsstation 19 eine an den Bus 25 angeschlossene Steuereinrichtung 20 auf, welche mit einer Sprachausgabe 21 (Lautsprecher oder Hörer) und mit einer Bestätigungstaste 23 verbunden ist.

Bei einem ersten Verfahren zur Inbetriebnahme eines Türzugangssystems erfolgt die Ausgabe der Anwahlstellen in Form akustischer Ansagen via Sprachausgabe. Das Verfahren umfasst die folgenden Verfahrensschritte:
1. Schritt: Die Türstation 3, insbesondere deren Steuereinheit 8, wird bei erstmaliger Anlegung an die Versorgungsspannung oder alternativ durch Betätigung der internen Aktivierungseinheit 10 in den Inbetriebnahmemodus versetzt.
2. Schritt: Der Sprachgenerator 11 der Türstation 3 gibt über die Steuereinheit 8 via Bus 25 gleichzeitig an alle Wohnungsstationen 13, 19 usw. in kurzen, vorab festgelegten Abständen die Anwahlstellen (respektive Ruftasten der Türstation) in Form von gesprochenen Zahlen, d. h. in Form einer akustischen Ansage via Steuereinheiten 14, 29 und Sprachausgaben 15, 21 aus: "ins", "wei", "rei" usw. Die Zahlen "ins" bzw. "wei" bzw. "Drei" usw. entsprechen dabei der ersten Ruftaste 5 bzw. der zweiten Ruftaste 6 bzw. der dritten Ruftaste 7 usw., d. h. jede Ruftasten fungiert als Anwahlstelle für eine bestimmte Wohnungsstation 13, 19.
3. Schritt: Für die Zuordnung einer bestimmten Ruftaste 5, 6, 7 zu einer bestimmten Wohnungsstation 13, 19 usw. wird das Haus begangen, d. h. es werden nacheinander die verschiedenen Wohnungsstationen 13, 19 usw. aufgesucht. Dabei wird jeweils über die Sprachausgabe 15, 21 der betreffenden Wohnungsstation 13, 19 die akustische Ansage der Türstation 3 verfolgt: "ins", "wei", "Drei" usw. Soll die aufgesuchte Wohnungsstation z. B. der zweiten Ruftaste 6 zugeordnet werden, wird nach dem Nennen der Zahl "Zwei" die Bestätigungstaste dieser Wohnungsstation gedrückt.
4. Schritt: Diese getroffene und via Bus 25 übermittelte Zuordnung zwischen Ruftaste und Wohnungsstation wird anschließend im Speicher 9 der Türstation 3 dauerhaft abgespeichert.
5. Schritt: Die bereits erfolgten und im Speicher 9 abgespeicherten Zuordnungen zwischen einer Ruftaste der Türstation 3 und einer Wohnungsstation respektive die betreffenden Zahlen werden aus der akustischen Ansage entfernt, um zu verhindern, dass bereits zugeordnete Wohnungsstationen erneut aufgerufen werden und danach fehlerhaft ein zweites Mal zugeordnet werden können.

In weiterer Ausgestaltung des ersten Verfahrens zur Inbetriebnahme eines Türzugangssystems kann zur Kontrolle eine die Zuordnung betreffende Rückfrage nach dem Drücken der Bestätigungstaste an der Wohnungsstation erfolgen. Hierzu wird nach dem Drücken der Bestätigungstaste eine Sprachmeldung vom Sprachgenerator 11 ausgegeben, wie z. B.: "Sie haben diese Wohnungsstation mit der Ruftaste "X" (z. B. "Zwei") der Türstation verbunden. Bitte bestätigen Sie diese Zuordnung durch einen kurzen Druck auf die Bestätigungstaste oder betätigen Sie die Bestätigungstaste länger als fünf Sekunden, um diese Zuordnung wieder zu löschen."

Üblicherweise werden Türstationen 3 modular aufgebaut, z. B. mit nur einer Ruftaste oder mit zwei Ruftasten oder mit drei Ruftasten oder mit vier Ruftasten usw. Die Steuereinheit 8 der Türstation 3 kennt anhand der bestückten Ruftasten die wirkliche Anzahl der Ruftasten der Türstation 3 und ermittelt daraus selbsttätig den für die Inbetriebnahme erforderlichen Zahlenraum für die akustische Ansage an den Wohnungsstationen 13, 19 usw. für die Zuordnung bei der Inbetriebnahme, z. B. bei vier Ruftasten den Zahtenraum "Eins", "Zwei", "Drei", "Vier".

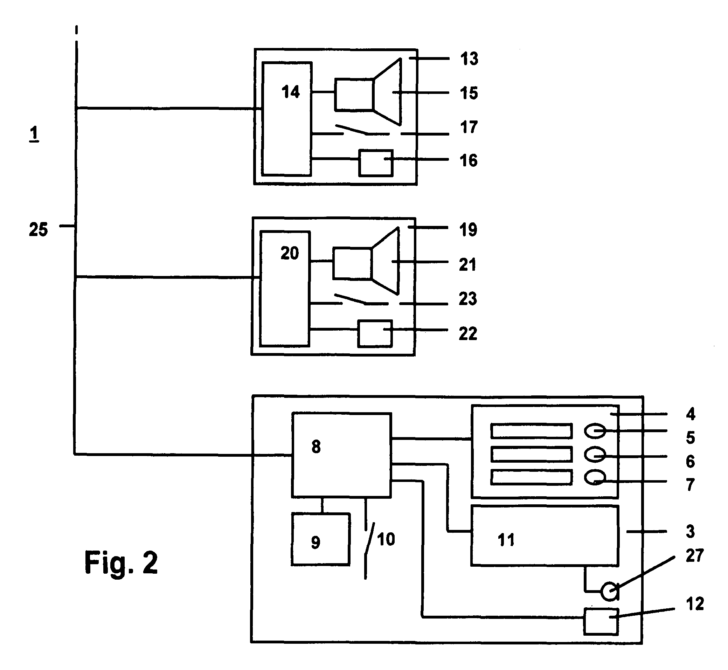

In Fig. 2 ist ein erweitertes Türzugangssystem dargestellt, bei welchem sowohl die Türstation 1 als auch die Wohnungsstationen 13, 19 jeweils zusätzlich ein Display aufweisen, und zwar
- ist bei der Türstation 3 ein Display 12 an der Steuereinheit 8 angeschlossen,
- ist bei der Wohnungsstation 13 ein Display 16 an der Steuereinheit 14 angeschlossen,
- ist bei der Wohnungsstation 19 ein Display 22 an der Steuereinheit 20 angeschlossen.

Das vorstehend erläuterte erste Verfahren zur Inbetriebnahme eines Türzugangssystems kann beim erweiterten Türzugangssystem derart abgeändert werden, dass der Zahlenraum "Eins", "Zwei", "Drei", "Vier" usw. zusätzlich im Display der Wohnungsstationen angezeigt werden kann. Ferner ist auch eine Wandlung zu einem zweiten Verfahren zur Inbetriebnahme eines Türzugangssystems möglich, welches auf optischer Anzeige beruht, d. h. beim zweiten Verfahren zur Inbetriebnahme eines Türzugangssystems erfolgt die Ausgabe der Anwahlstellen in Form optischer Anzeige via Display. Das Verfahren umfasst die folgenden Verfahrensschritte:
1. Schritt: Die Türstation 3 wird bei erster Anlegung an die Versorgungsspannung oder alternativ über die interne Aktivierungseinheit 10 in den Inbetriebnahmemodus versetzt.
2. Schritt: Die Steuereinheit 8 der Türstation 3 gibt gleichzeitig an die Displays 15, 22 aller Wohnungsstationen 13, 19 usw. in kurzen, vorab festgelegten Abständen die Anwahlstellen respektive Ruftasten der Türstation in Form einer optischen Anzeige via Display aus: "Eins", "Zwei", "Drei" usw. Die Zahlen "Eins", "Zwei", "Drei" usw. entsprechen dabei der ersten Ruftaste 5, der zweiten Ruftaste 6, der dritten Ruftaste 7 usw.
3. Schritt: Für die Zuordnung einer bestimmten Ruftaste 5, 6, 7 zu einer bestimmten Wohnungsstation 13, 19 wird das Haus begangen, d. h. es werden nacheinander die verschiedenen Wohnungsstationen aufgesucht. Dabei wird jeweils über die optische Anzeige im Display der betreffenden Wohnungsstation 13, 19 die von der Türstation 3 vorgegebene optische Anzeige verfolgt: "Eins", "Zwei", "Drei" usw. Soll die betreffende Wohnungsstation z. B. der zweiten Ruftaste 6 zugeordnet werden, wird nach Erkennen der Zahl "Zwei" auf dem Display die Bestätigungstaste dieser Wohnungsstation gedrückt.
4. Schritt: Diese Zuordnung wird anschließend im Speicher 9 der Türstation 3 dauerhaft abgespeichert.
5. Schritt: Die bereits erfolgten und im Speicher 9 abgespeicherten Zuordnungen zwischen einer Ruftaste der Türstation 3 und einer Wohnungsstation respektive die betreffenden Zahlen werden aus der optischen Anzeige im Display entfernt, um zu verhindern, dass bereits zugeordnete Wohnungsstationen erneut aufgerufen werden und danach fehlerhaft ein zweites Mal zugeordnet werden können.

In weiterer Ausgestaltung des zweiten Verfahrens zur Inbetriebnahme eines Türzugangssystems kann eine die Zuordnung betreffende Rückfrage nach dem Drücken der Bestätigungstaste an der Wohnungsstation erfolgen. Hierzu wird nach dem Drücken der Bestätigungstaste eine optische Anzeige von der Steuereinheit 8 der Türstation 3 an das Display der Wohnungsstation ausgegeben, wie z. B. eine Textanzeige: ",Sie haben diese Wohnungsstation mit der Ruftaste "X" (z. B. "Zwei") der Türstation verbunden. Bitte bestätigen Sie diese Zuordnung durch einen kurzen Druck auf die Bestätigungstaste oder betätigen Sie die Bestätigungstaste länger als fünf Sekunden, um diese Zuordnung wieder zu löschen."

Wie vorstehend erwähnt, können das erste und das zweite Verfahren auch miteinander kombiniert werden, so dass bei einer derartigen Kombination sowohl eine akustische Ansage via Sprachausgabe als auch eine optische Anzeige via Display erfolgt.

Selbstverständlich läuft die vorstehend erläuterte Kommunikation zwischen Türstation 3 und Wohnungsstationen 13, 19 jeweils über den Bus 25 und die Steuereinheiten 8, 14, 20 ab, sei es in Form der akustischen Ansage via Sprachausgabe oder sei es in Form der optischen Anzeige via Display.

Allgemein gilt für die vorstehend erläuterten Ausführungsformen:
Als Bestätigungstaste dient eine Taste, die üblicherweise in jeder Wohnungsstation vorhanden ist, vorzugsweise die Türöffnertaste.

Eine Beendigung des Inbetriebnahmemodus kann z. B. automatisch nach der Vergabe aller Anwahlstellen oder durch eine lange Betätigung der Aktivierungseinheit 10 für Inbetriebnahme erfolgen.

Bei der Aktivierung des Inbetriebnahmemodus können durch mehrfaches kurzes Drücken der Aktivierungseinheit 10 unterschiedliche Sprachvarianten aus dem Sprachgenerator 11 ausgewählt werden, z. B. führt einmaliges Drücken zur deutschen Sprachausgabe, zweimaliges Drücken zur englischen Sprachausgabe, dreimaliges Drücken zur französischen Sprachausgabe.

Durch ein in der Türstation 3 enthaltenes Mikrofon 27 kann eine eigene Zählbeschreibung in den Sprachgenerator 11 eingegeben werden. Hierzu wird die jeweilige Taste der Anwahlstelle gedrückt und im gedrückten Zustand gehalten, um den gewünschten Begriff einzusprechen, z. B.
- Ruftaste 5 wird gedrückt und "erste Etage links" wird gesprochen,
- Ruftaste 6 wird gedrückt und "erste Etage rechts" wird gesprochen, usw. Ohne eine derartige eigene Festlegung hat die werksseitige Vorgabe Gültigkeit.

### Bezugszeichenliste

- 1: Türzugangssystem eines Hauses
- 2: -
- 3: Türstation
- 4: Tastenfeld
- 5: erste Ruftaste
- 6: zweite Ruftaste
- 7: dritte Ruftaste
- 8: Steuereinheit
- 9: Speicher für Zuordnung
- 10: Aktivierungseinheit für Inbetriebnahme
- 11: Sprachgenerator
- 12: Display
- 13: Wohnungsstation
- 14: Steuereinheit
- 15: Sprachausgabe (Lautsprecher oder Hörer)
- 16: Display
- 17: Bestätigungstaste
- 18: -
- 19: Wohnungsstation
- 20: Steuereinheit
- 21: Sprachausgabe (Lautsprecher oder Hörer)
- 22: Display
- 23: Bestätigungstaste
- 24: -
- 25: Bus
- 26: -
- 27: Mikrofon

## Patentansprüche

1. Verfahren zur Inbetriebnahme eines Türzugangssystems (1) eines Hauses, welches eine Türstation (3), mindestens zwei Wohnungsstationen (13, 19) sowie einen diese Stationen verbindenden Bus (25) umfasst, wobei die Türstation (3) eine Steuereinheit (8) sowie eine Ruftaste (5, 6, 7) für jede Wohnungsstation (13, 19) aufweist, welche als Anwahlstelle für eine bestimmte Wohnungsstation (13, 19) fungiert und wobei jede Wohnungsstation (13, 19) eine Steuereinheit (14, 20) und eine Bestätigungstaste (17, 23) aufweiset, **dadurch gekennzeichnet,**
• **dass** in einem ersten Schritt die Steuereinheit (8) der Türstation (3) in den Inbetriebnahmemodus versetzt wird,
• **dass** in einem zweiten Schritt in allen Wohnungsstationen (13, 19) gleichzeitig die Anwahlstellen sukzessive in kurzen, vorab festgelegten Abständen ausgegeben werden,
• **dass** in einem dritten Schritt jede Wohnungsstation (13, 19) begangen und die Bestätigungstaste (17, 23) gedrückt wird, sobald die aktuell ausgegebene Anwahlstelle der aktuell aufgesuchten Wohnungsstation (13, 19) zugeordnet werden soll,
• **dass** in einem vierten Schritt die getroffene Zuordnung in einem Speicher (9) der Türstation (3) dauerhaft abgespeichert wird.

2. Verfahren nach Anspruch 1, **dadurch gekennzeichnet, dass** die bereits abgespeicherten Anwahlstellen aus der Menge der auszugebenden Anwahlstellen gestrichen werden.

3. Verfahren nach Anspruch 1, **dadurch gekennzeichnet, dass** zur Kontrolle der zwischen einer Wohnungsstation (13, 19) und einer Anwahlstelle abgespeicherten Zuordnung eine diese Zuordnung betreffende Meldung abgegeben wird, wonach eine Bestätigung dieser Zuordnung oder eine Löschung mit nachfolgender erneuter Zuordnungsmöglichkeit erfolgt.

4. Verfahren nach Anspruch 1, **dadurch gekennzeichnet, dass** die Ausgabe der Anwahlstellen in Form einer akustischen Ansage via Sprachausgabe (15, 21) in den einzelnen Wohnungsstationen (13, 19) erfolgt.

5. Verfahren nach Anspruch 1, **dadurch gekennzeichnet, dass** die Ausgabe der Anwahlstellen in Form einer optische Anzeige via Display (16, 22) in den einzelnen Wohnungsstationen (13, 19) erfolgt.

6. Verfahren nach Anspruch 1, **dadurch gekennzeichnet, dass** als Bestätigungstaste (17, 23) die Türöffnertaste dient.

7. Verfahren nach Anspruch 1, **dadurch gekennzeichnet, dass** eine Beendigung des Inbetriebnahmemodus automatisch nach der Vergabe aller Anwahlstellen oder durch eine lange Betätigung einer Aktivierungseinheit (10) für Inbetriebnahme erfolgt.

8. Verfahren nach Anspruch 1, **dadurch gekennzeichnet, dass** bei der Aktivierung des Inbetriebnahmemodus durch mehrfaches kurzes Drücken einer Aktivierungseinheit (10) unterschiedliche Sprachvarianten aus einem Sprachgenerator (11) auswählbar sind.

9. Verfahren nach einem der vorstehenden Anspruch 8, **dadurch gekennzeichnet, dass** durch ein in der Türstation (3) enthaltenes Mikrofon (27) eine eigene Zählbeschreibung in den Sprachgenerator (11) eingegeben wird, wozu die jeweilige Taste der Anwahlstelle gedrückt und im gedrückten Zustand gehalten wird, um den gewünschten Begriff einzusprechen.

## Claims

1. Method for starting up a door access system (1) in a house, which system comprises a door station (3), at least two apartment stations (13, 19) and a bus (25) which connects these stations, wherein the door station (3) has a control unit (8) and a call key (5, 6, 7) for each apartment station (13, 19), which acts as a selection point for a particular apartment station (13, 19), and wherein each apartment station (13, 19) has a control unit (14, 20) and a confirmation key (17, 23), **characterized**
• **in that** in a first step the control unit (8) of the door station (3) is put into the start-up mode,
• **in that**, in a second step, the selection points are successively output in all of the apartment stations (13, 19) at the same time at short, previously determined intervals,
• **in that**, in a third step, each apartment station (13, 19) is visited and the confirmation key is pushed as soon as the currently output selection point is to be assigned to the currently attended apartment station (13, 19),
• **in that**, in a fourth step, the assignment made is permanently stored in a memory (9) in the door station (3).

2. Method according to Claim 1, **characterized in that** the selection points which have already been stored are removed from the set of selection points which are to be output.

3. Method according to Claim 1, **characterized in that**, in order to check the assignment stored between an apartment station (13, 19) and a selection point, a message relating to this assignment is sent, on the basis of which this assignment is confirmed or is deleted and subsequently able to be reassigned.

4. Method according to Claim 1, **characterized in that** the output from the selection points is in the form of an audible announcement via voice output (15, 21) in the individual apartment stations (13, 19).

5. Method according to Claim 1, **characterized in that** the output from the selection points is in the form of a visual display via display (16, 22) in the individual apartment stations (13, 19).

6. Method according to Claim 1, **characterized in that** the door release key is used as the confirmation key (17, 23).

7. Method according to Claim 1, **characterized in that** the start-up mode is automatically terminated once all of the selection points have been allocated or by means of lengthy operation of an activation unit (10) for start-up.

8. Method according to Claim 1, **characterized in that** it is possible to select different language variants from a speech generator (11) when the start-up mode is activated by briefly pushing an activation unit (10) repeatedly.

9. Method according to one of the preceding claims, **characterized in that** an individual count description is input into the speech generator (11) via a microphone (27) contained in the door station (3), for which purpose the respective key of the selection point is pushed and held in the pushed condition in order to speak the desired term.

## Revendications

1. Procédé de mise en service d'un système d'accès par porte (1) d'une maison qui comprend une station de porte (3), au moins deux stations d'habitation (13, 19) ainsi qu'un bus (25) connectant lesdites stations, dans lequel la station de porte (3) comporte une unité de commande (8) ainsi qu'un bouton d'appel (5, 6, 7) destiné à chaque station d'habitation (13, 19), laquelle touche joue le rôle de point de sélection d'une station d'habitation déterminée (13, 19) et dans lequel chaque station d'habitation (13, 19) comporte une unité de commande (14, 20) et une touche de confirmation (17, 23), **caractérisé**
- **en ce que**, lors d'une première étape, l'unité de commande (8) règle la station de porte (3) en mode de mise en service,
- **en ce que**, lors d'une deuxième étape, les points de sélection sont simultanément délivrés successivement à de courts intervalles prédéterminés à toutes les stations d'habitation (13, 19) ;
- **en ce que**, lors d'une troisième étape, chaque station d'habitation (13, 19) est activée et la touche de confirmation (17, 23) est actionnée dès que le point de sélection effectivement délivré doit être associé à la station d'habitation (13, 19) effectivement recherchée ;
- **en ce que**, lors d'une quatrième étape, l'affectation effectuée est stockée de manière permanente dans une mémoire (9) de la station de porte (3).

2. Procédé selon la revendication 1, **caractérisé en ce que** les points de sélection déjà stockés sont effacés de l'ensemble de points de sélection devant être fournis en sortie.

3. Procédé selon la revendication 1, **caractérisé en ce que** pour contrôler l'affectation stockée entre une station d'habitation (13, 19) et un point de sélection, un message concernant cette affectation est délivré, suivi d'une confirmation de cette affectation ou de l'effacement suivi d'une possibilité renouvelée d'une affectation.

4. Procédé selon la revendication 1, **caractérisé en ce que** la fourniture en sortie des points de sélection s'effectue sous la forme d'un message acoustique par l'intermédiaire d'une sortie vocale (15, 21) dans les stations d'habitation individuelles (13, 19).

5. Procédé selon la revendication 1, **caractérisé en ce que** la fourniture en sortie des points de sélection s'effectue sous la forme d'un affichage optique par l'intermédiaire d'un afficheur (16, 22) dans les stations d'habitation individuelles (13, 19).

6. Procédé selon la revendication 1, **caractérisé en ce que** le bouton d'ouverture de porte est utilisé en tant que touche de confirmation (17, 23).

7. Procédé selon la revendication 1, **caractérisé en ce que** l'interruption du mode de mise en fonctionnement s'effectue automatiquement après l'entrée de tous les points de sélection ou par un actionnement prolongé d'une unité d'activation (10) destinée à la mise en service.

8. Procédé selon la revendication 1, **caractérisé en ce que** lors de l'activation du mode de mise en service, différentes variantes vocales peuvent être sélectionnées sur un générateur vocal (11) par une multiplicité d'appuis courts sur une unité d'activation (10).

9. Procédé selon l'une quelconque des revendications précédentes, **caractérisé en ce qu'**une description de décompte appropriée est saisie dans le générateur vocal (11) au moyen d'un microphone (27) présent dans la station de porte (3), la touche respective des points de sélection étant à cet effet actionnée et maintenue à l'état enfoncé, afin qu'elle corresponde au terme souhaité.
